# EUROPEAN PATENT SPECIFICATION

(11) **EP 3 744 999 B1**
(45) Date of publication and mention of the grant of the patent: **18.10.2023**
(21) Application number: 19000256.8
(22) Date of filing: 25.05.2019
(51) Int. Cl.: F16H 57/027

(54) **TRANSMISSION BREATHER ASSEMBLY**
GETRIEBEENTLÜFTERANORDNUNG
ENSEMBLE DE RENIFLARD DE TRANSMISSION

(43) Date of publication of application: 02.12.2020
(73) Proprietor: Voss Automotive GmbH, 51688 Wipperfürth (DE)
(72) Inventor: Souza, Gustavo Santos, 09847-338 Sao Bernardo do Campo - SP (BR); Fonseca Machado, Fabio, 09750-220 Sao Bernardo do Campo - SP (BR); Albuquerque Andrade, Gislaine, 09820-050 Sao Bernardo do Campo - SP (BR); Borges Lima, Marcio, 04827-070 Sao Paulo- SP (BR); De Pieri, Vinicius, 09270-550 Santo Andre -SP (BR)
(74) Representative: Rebbereh, Cornelia

(56) References cited:
- CN-Y- 201 206 621
- DE-B- 1 092 742
- JP-A- 2008 267 582
- JP-U- S5 793 674
- JP-U- S5 876 456

## Description

### FIELD OF THE INVENTION

The invention refers to a transmission breather assembly comprising a stem member and a cap member, wherein the stem member has a tubular main body, a breathing part and a connection part and the cap member is provided to cover the breathing part of the stem member.

### BACKGROUND OF THE INVENTION

Transmission breather assemblies are known in the art. They are used for venting transmissions since the operating temperatures inside the transmissions are comparably high such that oil and air inside the transmission expands. Therefore, transmission breather assemblies are provided for equalizing the pressure inside the transmission. Transmission breather assemblies are especially used in road vehicles. In road vehicles it is no problem to provide a transmission breather nozzle having a mushroom shaped rubber cap which transmission breather nozzle for equalizing air and oil pressure inside the transmission without the risk of water entering inside the transmission breather nozzle since a road vehicle normally does not dive into water filled basins. However, regarding off-road vehicles there arise some problems based on the unintentional flooding of the transmission in case the off-road vehicle moving through such water filled basin.

A transmission breather assembly is especially known from prior art document US 2011/0173935 A1 which transmission breather assembly includes a vertically disposed stanchion or stem having a castellated end and an annular shoulder axially spaced there from. The stanchion defines an internal passageway which communicates with the interior of the transmission either directly or through a flexible tube. Disposed on and over the castellated open end of the stanchion is a cap or cover. The cap or cover includes an internal cylindrical wall that cooperates with the castellated end of the stanchion to retain it thereon and creates an annular space adjacent the stanchion which functions as an air passageway. The lower open end of the cap or cover is generally radially aligned with the annular shoulder on the stanchion. The cap or cover is fabricated of a hydrophobic material. Such kind of transmission breather assembly is, however, not able to prevent water from entering inside the internal passageway of its stanchion in case the transmission breather assembly is used with an off-road vehicle moving through a water filled basin.

Prior art document EP 0 939 250 A2 discloses an apparatus and system for venting a transmission which provides a transmission breather allowing pressure equalization between the interior and exterior of the transmission while reducing or eliminating fluid expulsion from the transmission. The breather comprises a standpipe, a bowl having a first end secured to the standpipe and at least one aperture, a shroud secured to the standpipe and a filter disposed between the bowl and the standpipe. The standpipe has a first end, a second end and an intermediate portion extending axially between the first and second ends. The second end of the standpipe is provided to enable the breather to be top drivable to facilitate installation and removal of the breather with the transmission. The intermediate portion has an axially extending central passage and at least one radially extending passage. The shroud restricts the entry of external contaminants into the transmission through the breather. Air, transmission fluid, mist and vapor flow through the passages of the standpipe and through the filter which captures the fluid, mist and vapor flow allowing filtered air to be vented to the environment through the at least one aperture. The filter facilitates coalescence of the transmission fluid which is returned to the transmission via the passages in the standpipe. Also this kind of transmission breather assembly cannot prevent water from flooding inside the transmission breather standpipe in case the transmission breather assembly is used in an off-road vehicle which moves through a water filled basin.

According to DD 288440 A5 a transmission breather assembly for high dust loading use is known in the art which transmission breather assembly has a high cleaning efficiency provided by use of a helical shape of a corrugated inner tube provided inside an outer tube such that inside of the outer tube's wall a helically shaped passageway is built together with the corrugated inner tube. Caused by the pressure difference, an air flow is directed through the helically shaped canal wherein the pollutant particles deposit on the canal surfaces which are sticky caused by the oil fog. According to that prior art document, thus, the transmission breather assembly is not provided for avoiding water or fluid from entering the inside of the outer tube such that the transmission breather assembly is not provided for use with an off-road vehicle such that there is a risk of flooding the transmission caused by moving the off-road vehicle through a water filled basin.

CN 201 206 621 Y , on which the invention is based, refers to an automobile transmission normal-open ventilation device which comprises a valve core and valve cover sleeved outside the valve core. One end of the valve core is connected with a joint. An outer chamber is formed between the valve core and communicates which the external air. The automobile transmission ventilation device works based on the aerodynamics principle, adopts a labyrinth structure, a degradable die-cast plastics material and the normal-open structure. A vent is provided in the joint, the vent communicating with an inner chamber. A communicating outer chamber is formed between the valve core and the valve cover and the outer chamber communicates with the atmosphere. The outer surface of the valve core is provided with ring baffle body where each ring baffle body is provided with notches. Further, an oil groove on the valve cover and a gap are provided. The inner chamber communicates with the outer chamber through this gap.

DE 1 092 742 B discloses a breather device having a central hollow body and a peripheral housing wherein a number of spring loaded rings is provided on the central hollow body which are spaced apart by distance discs leaving a gap to the peripheral housing.

### SUMMARY OF THE INVENTION

Therefore, the underlying object of the present invention is to provide a transmission breather assembly which can be used with off-road vehicles moving through water basins without or at least with a lower risk, respectively, of flooding the transmission caused by the water entering into the transmission via the transmission breather assembly.

The object is solved according to the present invention by a transmission breather assembly according to claim 1. Further developments of the invention are defined in the dependent claims.

Therefore, according to the present invention the stem member of the transmission breather assembly is provided with a breathing part having a maze profile comprising at least two interconnected grooves where air can flow with high speed when escaping from the transmission or flowing to the transmission. The air flows along the grooves and through the respective interconnections between them. Especially caused by its surface tension water needs more time to move along the grooves and through the interconnections between them as compared to the velocity of the air flow such that the entering of water into the interior of this stem member and into the transmission can be avoided by the maze profile of the breathing part of the stem member. Further, a second reason for the comparably low speed of the moving water is provided by the deceleration caused by the maze profile and, thus, the length of the distance the water has to move and ascend along the grooves and the deceleration of the moving water caused by the interconnections between the grooves since the water is decelerated during its ascending through these comparably small interconnections. The transmission breather assembly is generally mounted at the application space in a vehicle directing the breathing part as an upper part and the connection part as a lower part of the transmission breathing assembly in the operating position at the application space within a vehicle. Since the breathing part of the stem member is provided with a maze profile and the cap member is provided to cover the breathing part of the stem member these both means are sufficient to provide an efficient transmission breather assembly which can especially also be used with an off-road vehicle and avoids a flooding of the transmission in case the off-road vehicle is moved through a water filled basin. Thus, a cost-efficient transmission breather assembly is provided according to the present invention having a relatively simple structure as compared to the prior art transmission breather assemblies.

The maze profile is provided by a number of alternating radially protruding ribs or walls and grooves, where the radially protruding ribs or walls each have at least one axial slit or vent to direct air flow along the grooves and through the protruding ribs or walls via the axial slits or vents for moving from one groove to the adjacent one. Thus, according to a preferred embodiment of the present invention a number of stacked radially protruding ribs or walls are provided especially leaving a groove between each two protruding ribs or walls. Thereby, alternating radially protruding ribs or walls and grooves are provided. To interconnect the grooves through the radially protruding ribs or walls the latter are provided with the at least one axial slit or vent. Therefore, the air flow is directed along the grooves and through the axial slits or vents.

In order to direct the air flow through the at least one outermost axial slit or vent to the environment or from the environment into the lower outermost groove the cap member is connected to the outside of the stem member. Such connection can especially be provided by clamping of the cap member to the outside of the stem member, especially its outermost radially protruding rib or wall which is positioned nearest to the connection part of the stem member. The cap member can especially be mushroom shaped. It prevents air and water as well as any contaminants from entering into the interior of the stem member. It also avoids a direct escaping of air and oil from the interior of the stem member into the environment. Especially only air can escape along the grooves and through the axial slits or vents of the radially protruding ribs or walls to the outside of the cap member at the outermost side of the breathing part of the stem member which means that an entering of water through the axial slits or vents there is at least effectively impeded.

Preferably, the inner diameter of the cap member fits the outer diameter of at least the outermost protruding ribs or wall being nearest to the connection part end of the stem member to seal the radially protruding ribs or walls against the inside of the cap member and to force air through the axial slits or vents and along the grooves and to prevent fluid from easily and quickly entering an inner or interior passageway of the tubular stem member's main body. Thus, the inner diameter of the cap member can lie contacting the outer surface in radial direction of the radially protruding ribs or walls or at least the outermost radially protruding rib or wall of the maze profile of the breathing part of the stem member. Thus, the cap member lies with its inner surface to the outer surface of the radially protruding ribs or walls of the maze profile of the breathing part of the stem member. Thus, air and especially also fluid can only run or move, respectively, through the axial slits or vents provided in the radially protruding ribs or walls to enter the inside of the cap member. Therefore, depending on the shaping of the axial slits or vents fluid and especially water can efficiently be hindered to enter the inner passageway of the stem member's tubular main body.

The radially protruding ribs or walls are preferably stacked leaving the grooves between each two protruding ribs or walls. Further, according to the present invention the radially protruding ribs or walls are gently inclined in the axial direction of the stem member's outermost end and the radially protruding ribs are meandering. Thus, the radially protruding ribs or walls are shaped such that water entering through the axial slit(s) or vent(s) of the outermost radially protruding rib or wall is in principle forced back through this slit or vent or these slits or vents since the grooves are also gently inclined such that water is forced to flow down the stem member out of the breathing part of the stem member and, thus, away from the opening of the tubular main body of the stem member at the outermost end of its breather part which opening is in fluid connection and air connection with the transmission. Therefore, also by providing such gently inclined radially protruding ribs or walls flooding of the transmission being in fluid connection with the inside of the stem member's tubular main body can be avoided.

Alternatively, the grooves and/or slits or vents can be provided such that caused by the surface tension of water an entering of water through the slits or vents and into the grooves is only possible at predetermined hydraulic thrust. Especially the grooves and/or slits or vents are shaped such that caused by the surface tension of water an entering of water into the grooves and through the slits or vents is only possible at predetermined hydraulic thrust. Further, the grooves defining surfaces of the radially protruding ribs or walls can be provided such that caused by the surface tension of water an entering of water through the slits or vents and into the grooves is only possible at the predetermined hydraulic thrust. Thus, the shaping or the surface design or form of the grooves and/or slits or vents can be designed such that just because of the grooves' or slits' or vents' shaping or the kind of surface or surface texture the entrance of water is avoided because of the relatively high surface tension of water. Therefore, only in case the hydraulic thrust increases over a predetermined value water will enter through the at least one outermost slit or vent into the grooves of the breathing part of the stem member of the transmission breather assembly.

Caused by the maze profile and/or the surface design of the breathing part of the stem member the moving up of water along the interconnected grooves can be decelerated. Thus, by the design of the maze profile regarding its specific shape, length, and surface design the time water needs to move through the maze profile can be adjusted such that the water needs more time for moving up the grooves and interconnections between them than especially a vehicle needs for crossing a water filled basin. Further, when a vehicle enters a water filled basin the vehicle's motor and transmission are cooled down such that their inner volume decreases leading to a suction effect. Such a suction effect would also affect the transmission breather assembly being submerged. Therefore, according to a preferred embodiment of the present invention the volume of the transmission breather assembly is dimensioned so large that despite of a largest possible shrinkage of the inner volume of the transmission breather assembly itself and of the transmission the entering water will not reach the transmission.

Furthermore, the stem member's tubular main body can be provided at its inside with an oil outlet avoiding means. Thus, oil from the transmission can be prevented from escaping through the transmission breather assembly to the environment. Such oil outlet avoiding means can especially be provided by a specific kind of shaping of the inside of the stem member's tubular main body. It is also possible to provide the inner surface of the stem member's tubular main body such that oil movement is stopped or at least slowed down.

The cap member is preferably made of plastic material such that manufacturing of the cap member is cost efficient. It is also possible without difficulty to provide the cap member made of plastic material with a connecting device for connecting the same on the breathing part of the stem member especially by providing a clamping means as a connecting device.

The outermost end of the breathing part of the stem member's tubular main body can axially project over or above the outermost radially protruding rib or wall to provide an additional barrier for water against entering the inside of the stem member's tubular main body. Thus, also such additional axially projecting elongation or part of the stem member's tubular main body can hinder water from entering inside the tubular main body and, thus, flowing there from inside the transmission flooding the same.

### DESCRIPTION OF THE DRAWINGS

For a more detailed description of the invention, exemplary embodiments of the same are now explained in more detail on the basis of the drawings, wherein
- Figure 1: shows a perspective view of a transmission breather assembly according to the present invention having a stem member with a main body, a breathing part and a connection part as well as a cap member covering the breathing part.
- Figure 2: shows a longitudinal section view of a second embodiment of a transmission breather assembly according to the present invention.
- Figure 3a: shows a side view of a third embodiment of a transmission breather assembly having a stem member with a main body, a breathing part and a connection part, where the cap member is left off.
- Figure 3b: shows a longitudinal section view of the transmission breather assembly according to figure 3a.
- Figure 4: shows a longitudinal section view of the cap member of the transmission breather assembly according to figure 2.
- Figure 5: shows a side view of a transmission breather assembly according to the present invention as a schematic diagram, which transmission breather assembly is mounted on a schematically shown transmission of a vehicle.

### DESCRIPTION OF THE PREFERRED EMBODIMENT

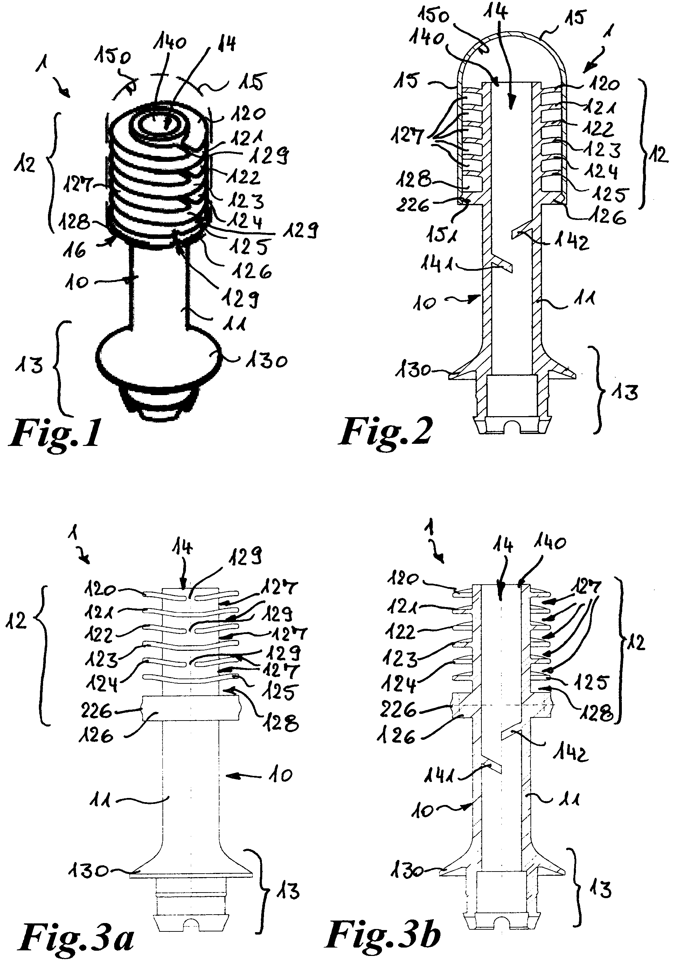

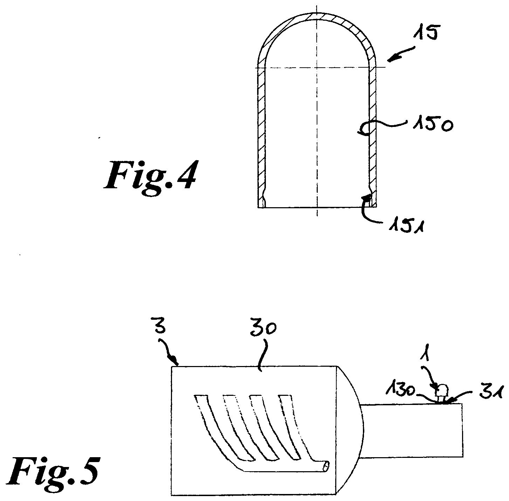

in figures 1 and 2 a transmission breather assembly 1 is shown. The transmission breather assembly 1 comprises a stem member 10 having a tubular main body 11 comprising a breathing part 12 and a connection part 13. The connection part 13 is provided for connecting the transmission breather assembly 1 directly or indirectly to a transmission 3 (see figure 5). Therefore, the stem member 10 and its tubular main body 11 have an inner passageway 14 running through the tubular main body 11 in its length or axial direction. The inner passageway 14 of the tubular main body 11 is or can be brought in fluid or air connection with the transmission. Since the transmission breather assembly 1 is provided for equalizing oil or air pressure inside the transmission it is generally mounted on top of the transmission or at a space inside a vehicle where it is provided at a higher mounting level than the transmission especially in order to avoid water entering into the inner passageway 14 of the tubular main body 11 of the stem member 10 of the transmission breather assembly 1.

In figure 5 one schematically shown example of an application space of the transmission breather assembly 1 on a transmission 3 of a vehicle is outlined. The distance between the connection or mounting point of the transmission breather assembly 1 at the upper side of the transmission 3 or its housing, respectively, and the floor the vehicle stands on may be for example 450 mm the maximum, especially 440 mm. In case the vehicle is an off-road vehicle it may move through water filled basins or small rivers for example. The water level then should and will be 500 mm the maximum. Therefore, the transmission breather assembly 1 shall allow air inlet and outlet out of the transmission 3 but should avoid any water inlet into the transmission 3 and any oil outlet out of the transmission 3 though the transmission breather assembly 1. In order to avoid oil leakage of oil from transmission 3 via the transmission breather assembly 1 the stem member 10 can be provided with an oil outlet avoiding means which might be any kind of lamellas or, for example, as shown in figure 2 two trap elements 141, 142 provided inside the inner passageway 14 of the breathing part 12 of stem member 10 of the transmission breather assembly 1. The two trap elements 141, 142 are inclined and staggered and positioned opposite to one another to effectively prevent oil from ascending and going out of the breathing part 12.

As may be seen from figures 1 and 2, the stem member's tubular main body 11 is provided with the breathing part 12 at one end and with the connection part 13 on its opposite end. The connection part 13 comprises a circumferential annular collar 130 slightly inclined regarding the length or axial extension of the stem member 10. The annular collar 130 is provided for covering the connection of the connection part 13 to the housing 30 of the transmission 3 or a tube running to the transmission 3. By this annular collar 130 some kind of sealing and protection against the entering of especially water and contaminants into the transmission 3 in the area of the connection part 13 of the transmission breather assembly 1 shall be prevented. For mounting the connection part 13 of the transmission breather assembly 1 especially to the housing of the transmission 3 one can press onto the annular collar 130 to provide for an interlocking between of the connection part 13 and a respective hole 31 in the housing 30 of the transmission 3. After mounting the transmission breather assembly 1 its annular collar 130 can especially seal the hole 31 to prevent an entering of water and contaminants into the transmission 3.

The breathing part 12 of stem member 10 is provided with a number of radially protruding ribs 120, 121, 122, 123, 124, 125, and 126 according to figures 1 and 2. Of course, there may be more or less of such radially protruding ribs. According to the embodiment as shown in figure 1, all of the radially protruding ribs 120 to 126 are in the shape of lamellas i.e. they are in the shape of relatively flat essentially annular discs. According to the embodiment as shown in figure 2, the lowermost radially protruding rib 126 is thicker than the other ones. The axially protruding ribs 120 to 126 are provided distant from one another defining grooves 127, 128 between each two of the protruding ribs. The volume of the groove 128 between the lowermost radially protruding rib 126 and the adjacent radially protruding rib 125 is a bigger than the volume of the grooves 127 between the other radially protruding ribs 120 to 125 to collect water inside this groove 128 as long as possible before it tends to move upward into the next groove 127 between the radially protruding ribs 124 and 125. Further, the radially protruding ribs 120 to 126 are provided with axial slits 129 which may also be seen from figure 1. As may especially be seen from this figure, the axial slits 129 of the stacked radially protruding ribs 120 to 126 are staggered in reverse order. The lowermost or outermost radially protruding rib 126 is provided particularly with four axial slits 129 which connect groove 128 with the environment of stem member 10 of the transmission breather assembly 1 when cap member 15 covers the breathing part 12 of stem member 10 of the transmission breather assembly 1 as shown in figure 1.

As may better be seen in figure 4, cap member 15 is slightly mushroom shaped and can be made of plastic material. It can further be provided with a fixing device like a clamping means to fixedly mount cap member 15 on breathing part 12. Such fixing device is shown as a circumferential groove 151 at the inner surface 150 of the cap member 15. Instead of the grove 151, the cap member 15 can e.g. also be provided with a bulge at its inner surface 150 or with any other fixing device. Further, in order to seal the inner surface 150 of cap member 15 against the breathing part 12, according to the embodiment of the transmission assembly 1 as shown in figure 1, a ring 16 is provided next to the radially protruding rib 126 in an outermost position of the breathing part 12 and directed to the connection part 13 of stem member 10 of the transmission breather assembly 1. It is not necessary that the ring 16 has a sealing effect. However, it is also possible to provide the ring 16 with some kind of a sealing effect or in the embodiment of a sealing ring. Especially by positioning the ring 16 close-fitted to the cap member 15 there is at least a small sealing effect. Instead of a ring 16 made of an elastomeric material also other sealing means can be used. Further, the ring 16 can be made of a plastic material or instead of a ring shape there may be provided any other element, like a bulge shaped or a cord like element. According to figure 2, instead of the ring 16 the radially protruding rib 126 is provided with a protruding ring like shaping 226 at its outermost rim. The protruding ring like shaping of the protruding rib 126 and/or the ring 16 or any alternative aforesaid element can latch or lock within the circumferential groove 151 or behind the bulge, respectively, of the cap member 15 to fix the cap member 15 on the breathing part 12 of stem member 10 of the transmission breather assembly.

Furthermore, the inner surface 150 of cap member 15 also tightly fits the outer rims of the radially protruding ribs 120 to 126 such that the inner surface 150 tightly fits the radially protruding ribs 120 to 126 forcing medium like air along the grooves 127 to 128 which medium may enter the grooves via the axial slits 129. The medium then runs from the inner passageway 14 of stem member 10 to the environment of the transmission breather assembly 1 or the opposite direction into the inner passageway 14 in order to provide for pressure equalization especially of air and oil inside the transmission 3.

The axial slits 129 are dimensioned to restrain water from entering through the axial slits 129 into the grooves 127 and 128, respectively, and to the inner passageway 14 of stem member 10 and, thus, into the transmission 3 being in fluid connection with the inner passageway 14. Especially caused by surface tension of water and the dimensioning of the axial slits 129, an entering of water through the slits 129 into the grooves 127, 128 may then only be possible at a predetermined high hydraulic thrust. In case water pressure exceeds the respective predetermined hydraulic thrust or after a long time submerging the transmission breather assembly 1 then water will enter from the environment of the transmission breather assembly 1 through the axial slits 129 of the radially protruding rib 126 and through the grooves 128, 127 to the outermost end of breathing part 12 and through the opening 140 into the inner passageway 14.

By providing the maze profile of the radially protruding ribs and grooves as well as the axial slits the unintentional inlet of water can efficiently be avoided at the same time making it easy to equalize the air pressure inside the transmission 3 since air can flow through the grooves and the slits without any problems.

As may also be seen from figures 1 and 2, the radially protruding ribs 120 to 126 are gently inclined in the axial direction of stem member 10. By such gentle inclining of the radially protruding ribs 120 to 126 water which has entered into grooves 127 and 128 will be forced to flow back and out of the lowermost or outermost groove 128 of breathing part 12 through the respective axial slits 129 provided in the radially protruding rib 126 there.

The transmission breather assembly 1 as shown in figures 3a and 3b differs from the embodiment as shown in figure 2 by an even thicker lowermost radially protruding rib 126 and by the slightly meandering shape of the radially protruding ribs 120 to 125. Especially in figure 3a the axial slits 129 can be seen for the radially protruding ribs 120, 122, and 124 which axial slits 129 are essentially aligned. The axial slits 129 of the other radially protruding ribs 121, 123, and 125 are staggered such that they may not be seen in figure 3a. The shown axial slits 129 of radially protruding ribs 120, 122, and 124 are provided at a lowermost part of a curve of the meandering radially protruding ribs 120, 122, and 124 and also of the respective adjacent meandering radially protruding ribs 121, 123, and 125 since all these radially protruding ribs 120 to 125 are meandering parallel to one another. By providing the axial slits 129 at the lowermost part of the curves entering water has to ascend in any case. Further, by providing the radially protruding ribs 120 to 126 with a meandering shape the distance the water has to move is increased as compared to providing the radially protruding ribs 120 to 125 perpendicular to the longitudinal extension of the stem member 10 only.

While this application has been described with an emphasis to particular embodiments, it should be understood that the foregoing description has been limited to the presently contemplated best mode for practicing the invention. It will be apparent that modifications may be made to the invention and that some or all of the advantages the invention may be obtained. Also, the invention is not intended to require each of the above described features and aspects or combinations thereof. In many instances, certain features and aspects are not essential for practicing other features and aspects. The invention should only be limited by the appended claims.

### Reference list

- 1: transmission breather assembly
- 3: transmission
- 10: stem member
- 11: tubular main body
- 12: breathing part
- 13: connection part
- 14: inner passageway
- 15: cap member
- 16: sealing ring
- 30: housing
- 31: hole
- 130: annular collar
- 120: radially protruding rib
- 121: radially protruding rib
- 122: radially protruding rib
- 123: radially protruding rib
- 124: radially protruding rib
- 125: radially protruding rib
- 126: radially protruding rib
- 127: groove
- 128: groove
- 129: axial slit
- 140: opening
- 141: trap element
- 142: trap element
- 150: inner surface
- 151: groove
- 226: protruding ring like shaping

## Claims

1. Transmission breather assembly (1) comprising a stem member (10) and a cap member (15), wherein the stem member (10) has a tubular main body (11), a breathing part (12) and a connection part (13) and the cap member (15) is provided to cover the breathing part (12) of the stem member (10), wherein the breathing part (12) of the stem member (10) is provided with a maze profile comprising at least two interconnected grooves (127,128) to direct air flow along the grooves (127,128) and to prevent fluid from quickly entering the interior (14) of the tubular main body (11) of the stem member (10)
wherein the maze profile is provided by a number of alternating radially protruding ribs or walls (120,121,122,123,124,125,126) and the grooves (127,128), wherein the radially protruding ribs or walls (120,121,122,123,124,125,126) each have at least one axial slit (129) to direct air flow along the grooves (127,128) and through the axial slits (129),
**characterized in that** the radially protruding ribs or walls (120,121,122,123,124, 125,126) are gently inclined in the axial direction of the stem member's outermost breathing part end and are meandering.

2. Transmission breather assembly (1) according to claim 1, wherein the cap member (15) is connected to the outside of the stem member (10).

3. Transmission breather assembly (1) according to claim 1, wherein the inner diameter of the cap member (15) fits the outer diameter of at least the outermost radially protruding rib or wall (120,121,122,123,124,125,126) being nearest to the connection part end of the stem member (10) to seal the radially protruding ribs or walls (120,121,122,123,124,125,126) against the inside of the cap member (15) and to force air through the axial slits (129) and along the grooves (127,128) and to prevent fluid from easily and quickly entering an inner passageway (14) of the stem member's tubular main body (11).

4. Transmission breather assembly (1) according to any of claims 1 to 3, wherein the radially protruding ribs or walls (120,121,122,123,124,125,126) are stacked leaving the grooves (127,128) between each two protruding ribs or walls (120,121,122,123,124,125,126).

5. Transmission breather assembly (1) according to any of claims 1 to 4, wherein the stem member's tubular main body (11) is provided at its inside with an oil outlet avoiding means.

6. Transmission breather assembly (1) according to any of claims 1 to 5, wherein the cap member (15) is made of plastic material.

7. Transmission breather assembly (1) according to any of claims 1 to 6, wherein the breathing part (12) outermost end of the stem member's tubular main body (11) axially projects over or above the outermost radially protruding rib or wall (120,121,122,123,124,125,126) to provide an additional barrier for water against entering the inside of the stem member's tubular main body (11).

8. Transmission breather assembly (1) according to any of claims 1 to 7, wherein the grooves (127,128) and/or axial slits (129) are provided such that caused by the surface tension of water an entering of water through the axial slits (129) and into the grooves (127,128) is only possible at a predetermined hydraulic thrust.

9. Transmission breather assembly (1) according to claim 8, wherein the grooves (127,128) and/or axial slits (129) are shaped such that caused by the surface tension of water an entering of water through the axial slits (129) and into the grooves (127,128) is only possible at a predetermined hydraulic thrust.

10. Transmission breather assembly (1) according to claim 8 or 9, wherein the grooves (127,128) defining surfaces of the radially protruding ribs or walls (120,121,122,123,127,125,126) are provided such that caused by the surface tension of water an entering of water through the axial slits (129) and into the grooves (127,128) is only possible at a predetermined hydraulic thrust.

11. Transmission breather assembly (1) according to any of claims 1 to 10, wherein caused by the maze profile and/or the surface design of the breathing part (12) of the stem member (10) the ascending of water along the interconnected grooves (127,128) is decelerated.

## Patentansprüche

1. Getriebeentlüfteranordnung (1), die ein Schaftelement (10) und ein Kappenelement (15) umfasst, wobei das Schaftelement (10) einen rohrförmigen Hauptkörper (11), einen Entlüftungsteil (12) und einen Verbindungsteil (13) aufweist und das Kappenelement (15) vorgesehen ist, um den Entlüftungsteil (12) des Schaftelements (10) abzudecken, wobei der Entlüftungsteil (12) des Schaftelements (10) mit einem Labyrinthprofil versehen ist, umfassend zumindest zwei miteinander verbundene Nuten (127, 128), um den Luftstrom entlang den Nuten (127, 128) zu leiten und zu verhindern, dass Fluid schnell in das Innere (14) des rohrförmigen Hauptkörpers (11) des Schaftelements (10) eindringt, wobei das Labyrinthprofil durch eine Anzahl von abwechselnd radial vorstehenden Rippen oder Wänden (120, 121, 122, 123, 124, 125, 126) und den Nuten (127, 128) gebildet ist, wobei jede der radial vorstehenden Rippen oder Wände (120, 121, 122, 123, 124, 125, 126) zumindest einen axialen Schlitz (129) aufweist, um einen Luftstrom entlang den Nuten (127, 128) und durch die axialen Schlitze (129) zu leiten,
**dadurch gekennzeichnet, dass**
die radial vorstehenden Rippen oder Wände (120, 121, 122, 123, 124, 125, 126) in der axialen Richtung des äußersten Endes des Entlüftungsteils des Schaftelements leicht geneigt und mäanderförmig sind.

2. Getriebeentlüfteranordnung (1) nach Anspruch 1 oder 2, wobei das Kappenelement (15) mit der Außenseite des Schaftelements (10) verbunden ist.

3. Getriebeentlüfteranordnung (1) nach Anspruch 1, wobei der Innendurchmesser des Kappenelements (15) zu dem Außendurchmesser zumindest der äußersten radial vorstehenden Rippe oder Wand (120, 121, 122, 123, 124, 125, 126) passt, die dem Ende des Verbindungsteils des Schaftelements (10) am nächsten ist, um die radial vorstehenden Rippen oder Wände (120, 121, 122, 123, 124, 125, 126) gegenüber der Innenseite des Kappenelements (15) abzudichten und Luft durch die axialen Schlitze (129) und entlang den Nuten (127, 128) zu zwingen und zu verhindern, dass Fluid leicht und schnell in einen inneren Durchgang (14) des rohrförmigen Hauptkörpers (11) des Schaftelements eintritt.

4. Getriebeentlüfteranordnung (1) nach einem der Ansprüche 1 bis 3, wobei die radial vorstehenden Rippen oder Wände (120, 121, 122, 123, 124, 125, 126) übereinander angeordnet sind, wobei die Nuten (127, 128) zwischen jeweils zwei vorstehenden Rippen oder Wänden (120, 121, 122, 123, 124, 125, 126) belassen sind.

5. Getriebeentlüfteranordnung (1) nach einem der Ansprüche 1 bis 4, wobei der rohrförmige Hauptkörper (11) des Schaftelements an seiner Innenseite mit einer Ölauslassvermeidungseinrichtung versehen ist.

6. Getriebeentlüfteranordnung (1) nach einem der Ansprüche 1 bis 5, wobei das Kappenelement (15) aus Kunststoff besteht.

7. Getriebeentlüfteranordnung (1) nach einem der Ansprüche 1 bis 6, wobei das äußerste Ende des Entlüftungsteils (12) des rohrförmigen Hauptkörpers (11) des Schaftelements axial über oder oberhalb der äußersten radial vorstehenden Rippe oder Wand (120, 121, 122, 123, 124, 125, 126) vorsteht, um eine zusätzliche Wasserbarriere gegen das Eindringen in das Innere des rohrförmigen Hauptkörpers (11) des Schaftelements zu bilden.

8. Getriebeentlüfteranordnung (1) nach einem der Ansprüche 1 bis 7, wobei die Nuten (127, 128) und/oder axialen Schlitze (129) so vorgesehen sind, dass aufgrund der Oberflächenspannung von Wasser ein Eindringen von Wasser durch die axialen Schlitze (129) und in die Nuten (127, 128) nur bei einem vorgegebenen hydrostatischen Druck möglich ist.

9. Getriebeentlüfteranordnung (1) nach Anspruch 8, wobei die Nuten (127, 128) und/oder axialen Schlitze (129) so geformt sind, dass aufgrund der Oberflächenspannung von Wasser ein Eindringen von Wasser durch die axialen Schlitze (129) und in die Nuten (127, 128) nur bei einem vorgegebenen hydrostatischen Druck möglich ist.

10. Getriebeentlüfteranordnung (1) nach Anspruch 8 oder 9, wobei die Nuten (127, 128), die Oberflächen der radial vorstehenden Rippen oder Wände (120, 121, 122, 123, 127, 125, 126) definieren, so vorgesehen sind, dass durch die Oberflächenspannung von Wasser ein Eindringen von Wasser durch die axialen Schlitze (129) und in die Nuten (127, 128) nur bei einem vorbestimmten hydrostatischen Druck möglich ist.

11. Getriebeentlüfteranordnung (1) nach einem der Ansprüche 1 bis 10, wobei durch das Labyrinthprofil und/oder die Oberflächengestaltung des Entlüftungsteils (12) des Schaftelements (10) das Aufsteigen von Wasser entlang den miteinander verbundenen Rillen (127, 128) verlangsamt ist.

## Revendications

1. Ensemble de reniflard de transmission (1) comprenant un élément de tige (10) et un élément de capuchon (15), dans lequel l'élément de tige (10) comporte un corps principal tubulaire (11), une partie de respiration (12) et une partie de liaison (13), et l'élément de capuchon (15) est prévu pour recouvrir la partie de respiration (12) de l'élément de tige (10), dans lequel la partie de respiration (12) de l'élément de tige (10) est pourvue d'un profil en labyrinthe comprenant au moins deux rainures (127, 128) interconnectées pour diriger un écoulement d'air le long des rainures (127, 128) et pour empêcher un fluide de pénétrer rapidement à l'intérieur (14) du corps principal tubulaire (11) de l'élément de tige (10), dans lequel le profil en labyrinthe est fourni par un nombre de nervures ou parois saillantes radialement (120, 121, 122, 123, 124, 125, 126) alternées et les rainures (127, 128), dans lequel les nervures ou parois saillantes radialement (120, 121, 122, 123, 124, 125, 126) comportent chacune au moins une fente axiale (129) pour diriger un écoulement d'air le long des rainures (127, 128) et à travers les fentes axiales (129), **caractérisé en ce que** les nervures ou parois saillantes radialement (120, 121, 122, 123, 124, 125, 126) sont légèrement inclinées dans la direction axiale de l'extrémité de partie de respiration la plus extérieure de l'élément de tige et sont sinueuses.

2. Ensemble de reniflard de transmission (1) selon la revendication 1, dans lequel l'élément de capuchon (15) est relié à l'extérieur de l'élément de tige (10).

3. Ensemble de reniflard de transmission (1) selon la revendication 1, dans lequel le diamètre intérieur de l'élément de capuchon (15) épouse le diamètre extérieur d'au moins la nervure ou paroi saillante radialement (120, 121, 122, 123, 124, 125, 126) la plus extérieure qui est la plus proche de l'extrémité de partie de liaison de l'élément de tige (10) pour sceller les nervures ou parois saillantes radialement (120, 121, 122, 123, 124, 125, 126) contre l'intérieur de l'élément de capuchon (15) et pour forcer l'air à travers les fentes axiales (129) et le long des rainures (127, 128) et pour empêcher un fluide de pénétrer facilement et rapidement dans une voie de passage intérieure (14) du corps principal tubulaire (11) de l'élément de tige.

4. Ensemble de reniflard de transmission (1) selon l'une quelconque des revendications 1 à 3, dans lequel les nervures ou parois saillantes radialement (120, 121, 122, 123, 124, 125, 126) sont empilées en laissant les rainures (127, 128) entre chaque deux nervures ou parois saillantes (120, 121, 122, 123, 124, 125, 126).

5. Ensemble de reniflard de transmission (1) selon l'une quelconque des revendications 1 à 4, dans lequel le corps principal tubulaire (11) de l'élément de tige est pourvu, au niveau de son intérieur, d'un moyen d'évitement de sortie d'huile.

6. Ensemble de reniflard de transmission (1) selon l'une quelconque des revendications 1 à 5, dans lequel l'élément de capuchon (15) est constitué de matière plastique.

7. Ensemble de reniflard de transmission (1) selon l'une quelconque des revendications 1 à 6, dans lequel l'extrémité la plus extérieure de partie de respiration (12) du corps principal tubulaire (11) de l'élément de tige fait saillie axialement sur ou au-dessus de la nervure ou paroi saillante radialement (120, 121, 122, 123, 124, 125, 126) la plus extérieure pour fournir une barrière supplémentaire contre toute pénétration d'eau à l'intérieur du corps principal tubulaire (11) de l'élément de tige.

8. Ensemble de reniflard de transmission (1) selon l'une quelconque des revendications 1 à 7, dans lequel les rainures (127, 128) et/ou les fentes axiales (129) sont prévues de sorte que, sous l'effet de la tension de surface d'eau, une pénétration d'eau à travers les fentes axiales (129) et dans les rainures (127, 128) ne soit possible qu'à une poussée hydraulique prédéterminée.

9. Ensemble de reniflard de transmission (1) selon la revendication 8, dans lequel les rainures (127, 128) et/ou les fentes axiales (129) sont façonnées de sorte que, sous l'effet de la tension de surface d'eau, une pénétration d'eau à travers les fentes axiales (129) et dans les rainures (127, 128) ne soit possible qu'à une poussée hydraulique prédéterminée.

10. Ensemble de reniflard de transmission (1) selon la revendication 8 ou 9, dans lequel les rainures (127, 128) définissant des surfaces des nervures ou parois saillantes radialement (120, 121, 122, 123, 124, 125, 126) sont prévues de sorte que, sous l'effet de la tension de surface d'eau, une pénétration d'eau à travers les fentes axiales (129) et dans les rainures (127, 128) ne soit possible qu'à une poussée hydraulique prédéterminée.

11. Ensemble de reniflard de transmission (1) selon l'une quelconque des revendications 1 à 10, dans lequel, sous l'effet du profil en labyrinthe et/ou de la conception de surface de la partie de respiration (12) de l'élément de tige (10), la montée d'eau le long des rainures (127, 128) interconnectées soit ralentie.
